# EUROPEAN PATENT APPLICATION

(11) **EP 2 330 757 A1**
(43) Date of publication of application: **08.06.2011**
(21) Application number: 09252743.1
(22) Date of filing: 07.12.2009
(51) Int. Cl.: H04B 10/12, H04B 7/26

(54) **Wireless connector**

(71) Applicant: BRITISH TELECOMMUNICATIONS public limited company, London EC1A 7AJ (GB)
(72) Inventor: The designation of the inventor has not yet been filed
(74) Representative: Brinck, Coreena Fiona Anne

(57) **Abstract**

A wireless connector for connecting a pair of optical networks providing data communications is provided. The connector is provided in two parts which are linked by a wireless communications link. The two parts comprise a part including a first directional antenna connected to a first energy transducer coupled to a first one of said pair of optical networks and a second component part including a second directional antenna connected to a second energy transducer. The first directional antenna is arranged to passively transmit electrical signals derived from optical energy received by the energy transducer from said first one of said pair of optical networks. The energy transducer is arranged to couple to the other one of said pair of optical networks to generate optical signals in said optical network responsive to electrical signals received by said second directional antenna from said first directional antenna. The direction of signal transmission may be uni-directional or bi-directional if said energy transducers are capable of duplex operation, i.e., of transferring electro-optical energy in each direction between the two networks and appropriate signal control means are provided.

## Description

The present invention relates to a wireless connector for connecting two optical fibre networks, to a method of using said wireless connector and related aspects. In particular, but not exclusively, the invention relates to a passive wireless connector for optical fibre for use in the installation of a new optical network within residential premises.

High-speed access networks providing optical fibre to the home (FTTH) and similar large scale network optical fibre infrastructure deployment schemes have been proposed. However, in order for customers to benefit more from the high-speed access network, an appropriately high-speed connection must be provided between the customer premises and the optical access network.

Several problems arise when considering how to connect over a large geographic scale a large number of customers to an optical access network. Firstly, the connection cost from the optical access network to the customer premises needs to be minimised. Secondly, the deployment of an optical access network on a large geographic scale (regionally/nationally) means that potentially millions of customers need to be connected over a relatively short period of time. This means each customer's premises which requires connection needs to be connected in as time-efficient a manner as possible. Thirdly, a connection to the optical access network needs to preserve as much as possible the high bandwidth and data transmission speeds that the optical access network can support, as otherwise the connection between the customer and the access network functions as a bottleneck.

Whilst it is likely that fast deployment to customers could, for example, be provided by providing FTTC (Fibre to the Curb/Cabinet) and then providing copper-wire connectivity to the customer premises, the use of copper-wire would then limit the potential data transmission speeds between the customer premises and the optical network. Another possibility is to provide FTTC and then to provide a wireless network which enables one or more customers to connect wirelessly to an optical access point provided in the access network domain. However, such wireless networks would again limit the potential data transmission speeds between customers and the optical access network.

Deployment of optical fibre to each customer's premises (FTTH) impacts both the timescale for providing a large-scale service deployment and the cost of deployment. The physical characteristics of optical fibre are such that existing duct and pipe access routes may not be suitable (optical fibres have much larger radius of bend curvatures than those which copper wire can tolerate). This means that new ducts and other access routes are required for fibre to the home, which means that new boreholes and apertures may need to be provided to enable the fibre deployment routes to cross various physical obstacles such as building boundaries and water obstacles between the premises which are to be connected and the optical access network. Negotiating new access routes and rights can be very time-consuming.

It is known to provide radio over fibre technology for wireless networks. Optical wireless networking connectivity typically uses radiofrequency optical signals which can be generated, for example, by direct or indirect intensity modulation of a light source such as a laser.

In known 'radio-over-fibre' systems, a signal is transferred to an antenna by an optical fibre which uses an electro-absorption modulator (EAM) as a full duplex electro-optical transducer. The EAM functions as a transducer by transferring energy in the optical domain to energy in the electrical domain, enabling a wireless network to be deployed in an area which has no or reduced wireless connectivity to other wireless networks. Sufficient energy is achieved in each direction (optical to electrical and vice versa) that amplification or regeneration of the optical/wireless signal is not required for picocell coverage, i.e., a service range of around 3 meters or so from the antenna source can be provided. More details of the physical properties of the picocells which can be passively provided in this manner by EAMs are described in Wake et al, in "Passive picocell: a new concept in wireless network infrastructure" Electronics Letters, 27th February 1997, Vol. 33, No. 5, which described how a picocell can be provided by a passively operated EAM on customer premises. Also, United States Patent Application 2003/0016418 describes a terminal in an optical communications network which can simultaneously receive and modulate an optical signal, and discusses how this can be used to provide picocell wireless coverage in customer premises in a FTTH deployment scheme. Other examples of prior art in which passively powered wireless networks are described include United States Patent Application number US2009/0116843, entitled "Device for Transmitting and Receiving Data and Corresponding Operating Method", in which Rohde describes a passive device including an optical electrical converter unit, a electrical to optical converter unit, an antenna and a polymer modulator suitable for supplying a radio picocell in a building using a wireless data communications network.

An antenna arrangement powered using energy derived from an EAM as known in the art is thus arranged to provide small areas of network coverage and support a signal strength which is too low to provide coverage through radio-frequency absorbing physical objects such as, for example, brick and concrete walls etc. The access network optical fibre accordingly needs to extend into the area where the EAM is to provide wireless LAN coverage. If not, then the radio-frequency signals provided by the antenna will need to be amplified to provide coverage within the building. This requires a power source to boost the wireless signal and extend the range of the wireless picocell into the customer premises.

Various embodiments of the invention seek to obviate and/or mitigate the limitations of known techniques for providing customer premises with high-speed data connectivity.

### SUMMARY STATEMENTS OF INVENTION

The aspects of the invention are set out in the accompanying independent claims, and various specific embodiments are as set out by the accompanying dependent claims, and as set out hereinbelow.

One aspect of the invention seeks to provide a wireless connector for connecting a pair of optical networks providing data communications, comprising: a first component part including a first directional antenna connected to a first energy transducer coupled to a first one of said pair of optical networks; and a second component part including a second directional antenna connected to a second energy transducer, wherein the first directional antenna is arranged to passively transmit electrical signals derived from optical energy received by the energy transducer from said first one of said pair of optical networks, and wherein the energy transducer is arranged to couple to the other one of said pair of optical networks to generate optical signals in said optical network responsive to electrical signals received by said second directional antenna from said first directional antenna.

In one embodiment, the electrical signals are passively amplified by the energy transducer prior to being transmitted by the directional antenna, which removes any need to provide a separate source of electrical power to the wireless connector component. The directional antennas may also be high-gain antennas and/or any other pair of antennas which can be configured to support a short-range (i.e., of the order of less then a meter, and preferably, less than 50cm or even less than 30cm) wireless communications link.

In use of the wireless connector, said first directional antenna may be arranged to wirelessly connect said pair of optical networks to provide a point-to-point data communications link by transmitting said electrical signals derived from optical energy of said first one of said pair of optical networks to said second directional antenna.

The point-to-point communications link may be bi-directional and the energy transducers of each component part may operate in a duplex mode to enable electrical signals to be wirelessly transferred in one direction from an optical fibre in the other optical network to an optical fibre in the first optical network and in another direction from the first optical network to the other optical network.

The electrical signals may be radio-frequency signals. The optical signals may be radio-frequency signals. Alternatively another frequency or frequencies may be used, such as micro-wave as appropriate for the environment in which the wireless connector is deployed.

In use of the connector, the antennas wirelessly may connect through a physical barrier between the first and second antennas.

The energy transducers may comprise electro-absorption modulators.

Another aspect of the invention seeks to provide a method of connecting a first optical communications network provided on client premises to a second optical network using a wireless connector, the method comprising: coupling a first component part of said wireless connector comprising an electro-absorption modulator and a connected directional antenna to said first optical communications network; coupling a second component part of said wireless connector comprising an electro-absorption modulator and a connected directional antenna to said second optical communications network, and arranging the directional antennas to provide a point-to-point wireless communications link between said first and second optical fibre networks.

The method may further comprise aligning the direction of wireless transmission of said antennas of each component part of said wireless connector such that the wireless link provided by the wireless connector supports the transmission rate of data within a communications channel of one or both of said optical networks.

Another aspect of the invention seeks to provide a communications system comprising: a first optical fibre communications network including a first electro-absorption modulator arranged to send provide electrical signals to a first directional antenna; and a second optical fibre communications network including a second electro-absorption modulator arranged to receive electrical signals from
a second directional antenna; wherein the first and second electro-absorption modulators are arranged to passively power said first and second antennas to establish a point-to-point wireless communications link between said first and second optical fibre networks.

The wireless communications link may pass through a physically solid obstruction providing a barrier between the first and second optical fibre networks.

For example, a physically solid obstruction or barrier may comprises a building perimeter or infrastructure such as a wall or roof.

Another aspect of the invention seeks to provide a communications system comprising: at least two optical networks; at least two energy transducing means, each coupled to one of said at least two optical networks; and at least two wireless signal transceiver means, each connected to a said energy transducing means, whereby a pair of said at least two wireless signal transceiver means generate a wireless point-to-point communications link between a respective pair of optical networks.

The invention enables optical networks to be installed on a communications service consumer's (for example, a customer's) premises in a more time-efficient way than one which requires any creation of a new access route to which penetrates the physical building infrastructure using a new bore-hole or duct. The premises may be a residential home where the service is a residential one, or for other types of service consumers a campus or office building or buildings or the like. The service can be connected cheaply and time-efficiently as connection from the premises to a high-speed optical access network does not need to create apertures in any physical obstruction between the optical network provided on the customer premises and the public access optical network. Whilst wireless links which have sufficient transmission range to penetrate physical obstructions are known in the art, this requires the transmitted signals to have relatively high energy which exceeds that which EAMs can provide to antennas providing network coverage over a wide area. The alternative is to use antennas which consume electrical power at a rate which necessitates an appropriate electrical power supply from the electrical mains, batteries, or an electrical generator.

Various embodiments of the invention remove the need to either locate the points of interconnection between two optical networks where a power supply is available or to provide an aperture through any physical obstruction or route the fibre around a physical obstruction to enable interconnection between two optical networks. Moreover, the connection speeds are sufficiently high to avoid the connector functioning as a bottleneck along the communications path between the service consumer premises and the local exchange.

The various aspects and embodiments of the invention described herein above and below in the detailed description of the accompanying drawings and in the claims may be suitably combined with each other in any arrangement which is apparent to one of ordinary skill in the art.

Embodiments of the invention will now be described with reference to the accompanying drawings which are by way of example only and in which:
Figure 1 shows a prior art arrangement for providing a wireless network on customer premises:
Figure 2 shows a wireless connector arrangement according to an embodiment of the invention;
Figure 3 shows the client network environment shown in Figure 2 supporting a plurality of network technologies;
Figure 4 shows in more detail a wireless connector according to an embodiment of the invention; and
Figure 5 shows in more detail how a plurality of network technologies located on client premises are connected using a wireless connector according to an embodiment of the invention to an optical access network.

In the Figures, those components which are the same or have the same or similar functionality share the same numbering scheme.

The best mode of the invention currently known to the inventors will now be described with reference to the accompanying drawings. Those of ordinary skill in the art will be aware that the description of one or more embodiments of the invention provided below is limited to those features whose inclusion is necessary for an understanding of the invention, and that other features may not be described explicitly if their function and necessity is already well known in the art.

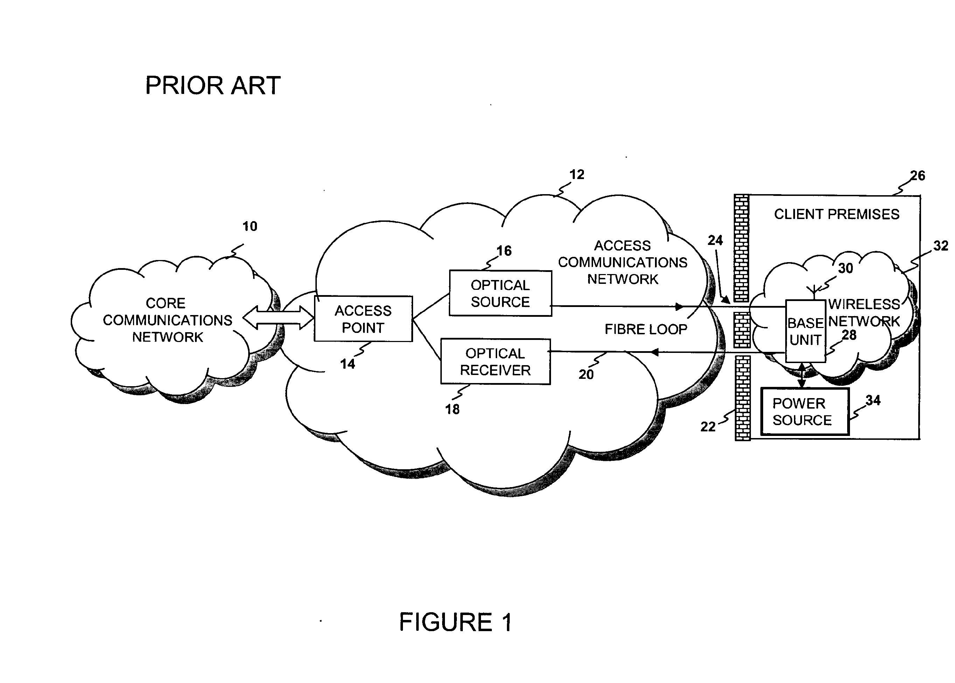

A known communications system 1 will now be described with reference to Figure 1 of the accompanying drawings. In Figure 1, the communications system 1 comprises a core communications network 10 which interconnects with an optical access network 12 via a suitable access point 14. For example, the point of interconnection between the core network 10 and the optical access network 12 is located in a local exchange (LE) in some embodiments of the invention, where the access network is provided as part of the public communications network infrastructure.

The access network comprises an optical head end comprising at least one optical signal source 16 and at least one optical signal receiver. The optical signal source 16 transmits signals out to at least one optical signal receiver 18 over a loop of optical fibre 20. In embodiments where the head-end of the optical access network is located in a local exchange or equivalent network nodal location of a public service communications network, the optical fibre loop 20 provides a loop to one or more locations (for example, customer or client premises 26 as shown in Figure 1) at which customers subscribing the a service using the optical access network are able to connect to the access network.

As shown in Figure 1, in order to provide a client with a network which connects to the local optical fibre loop 20, at least one aperture 24 is provided through a physical obstacle 22 such as the wall of the customer premises. The fibre loop which extends from the local exchange to within the customer premises is used to provide a short range wireless network 32. The wireless network 32 is generated using an antenna 30 attached to the local fibre loop 20 using a base unit 28 which in Figure 1 requires a separate power source 34. If, instead, a passively powered antenna 30 is provided, than the base unit 28 incorporates an electro-absorption modulator which draws its power directly from the optical fibre 22 within the customer premises.

As shown in Figure 1, the optical fibre local loop physically penetrates the customer premises to provide the customer with a wireless network. This requires a costly and time-consuming installation process, especially when the connection between any fibre located on the customer premises and the external local loop fibre needs to pass through physical obstacles. Where it is necessary to pass through a physical obstacle, if a new aperture and/or duct is to be provided along which the optical fibre is to pass through the physical obstacle, the necessity of generating such apertures/boreholes/laying duct and of obtaining all necessary legal permissions required greatly complicates the time to install such wireless networks. Accordingly, a network installation scheme which provides one or more wireless networks located on customer premises with access to a high-speed local access network such as is shown in Figure 1 is not feasible where the numbers of customers to be connected is on a regional and/or national scale due to the long amount of time each connection could take to be installed.

According to an embodiment of the invention, a wireless connector 36 for two optical communications networks comprises two component parts 62, 64. In use, these two component parts are wirelessly connected so that wirelessly transmitted communications data can be transmitted either in a unidirectional manner or in a bi-directional manner between the two parts.

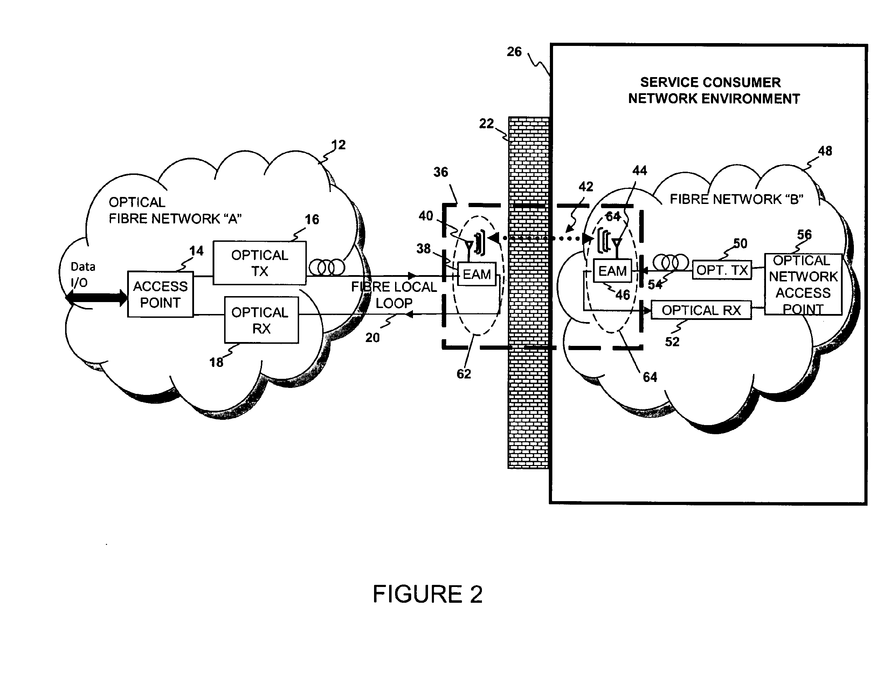

Figure 2 of the accompanying drawings shows such a wireless connector 36 according to an embodiment of the invention connecting a first optical communications network 12, for example an access network 12 as shown in Figure 2, to a second optical communications network 48, for example, an optical fibre link and/or optical fibre loop, located within the communications service consumer network environment 26 as shown in Figure 2. The wireless connector 36 provides a wireless communications link between the pair of optical networks 12, 48. In the embodiment shown in Figure 2, a service consumer connected using the wireless connector 36 is capable of accessing a high-speed communications service provided by a communications service provider over the access network 12, such as, for example, a very fast broadband service providing communication bandwidths of the order of 100 Mbps and higher to service consumers, despite the presence of an obstacle, for example wall 22 as shown in Figure 2, which is capable of absorbing energy transmitted at the frequencies of the wireless communications link.

In the exemplary embodiment shown in Figure 2, the environment of the service consumer network 48 comprises premises (for example, a residential building) and a barrier 22, for example, a physical obstacle or boundary such as may be provided by building infrastructure such as a wall, which lies along the line-of-sight path between the two component parts 62, 64 forming the wireless connector 36. In this way, at the point of interconnection between the pair of optical networks 48, 12, a physical object is provided which absorbs energy from the wireless communications link between the two component parts 62, 64 of the wireless connector 36.

The wireless connector 36 comprises a first component part, shown in Figure 2 on the first side of the physical obstruction 22 and a second component part, shown in Figure 2 on the second side of the physical obstruction 22. The first component part comprises a first energy transducer 38, for example, an electro-optical energy transducer such as, for example, an electro-absorption modulator (EAM) which is coupled to the first (access) optical network 12. The second component part comprises another energy transducer 46, for example, an electro-optical energy transducer such as another EAM which is coupled to the other optical network 48. Although the embodiments described herein generally refer to the use of an EAM to transduce energy from received optical communications signals to generate wireless communication signals, the term EAM is used as a synecdoche for any other appropriate electro-optical energy transducers.

In one embodiment of the invention, a unidirectional downstream link is provided (not shown in Figure 2) as another communications link, for example existing communications infrastructure such as a copper-wire connection to the local exchange, is used to provide an upstream communications link.

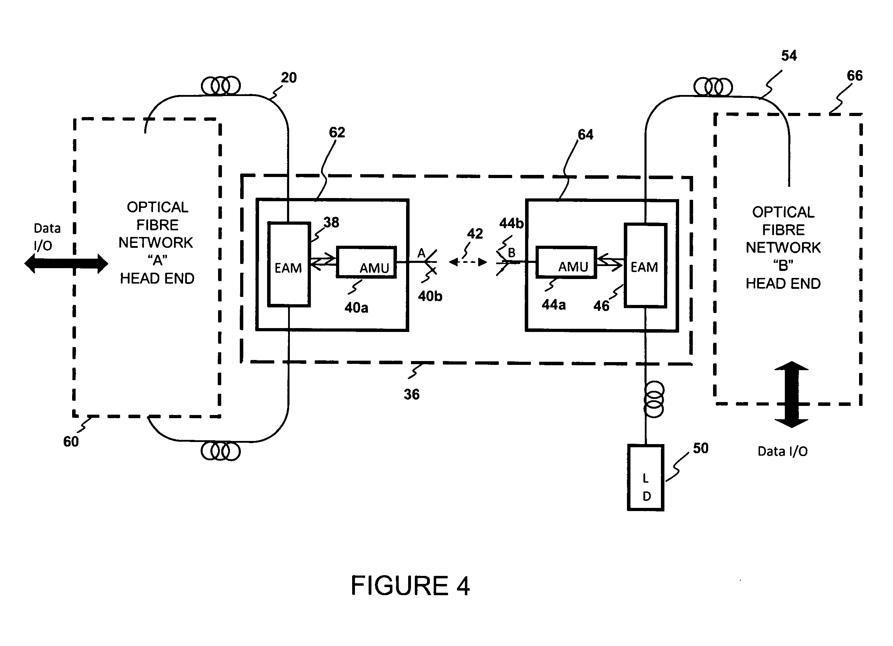

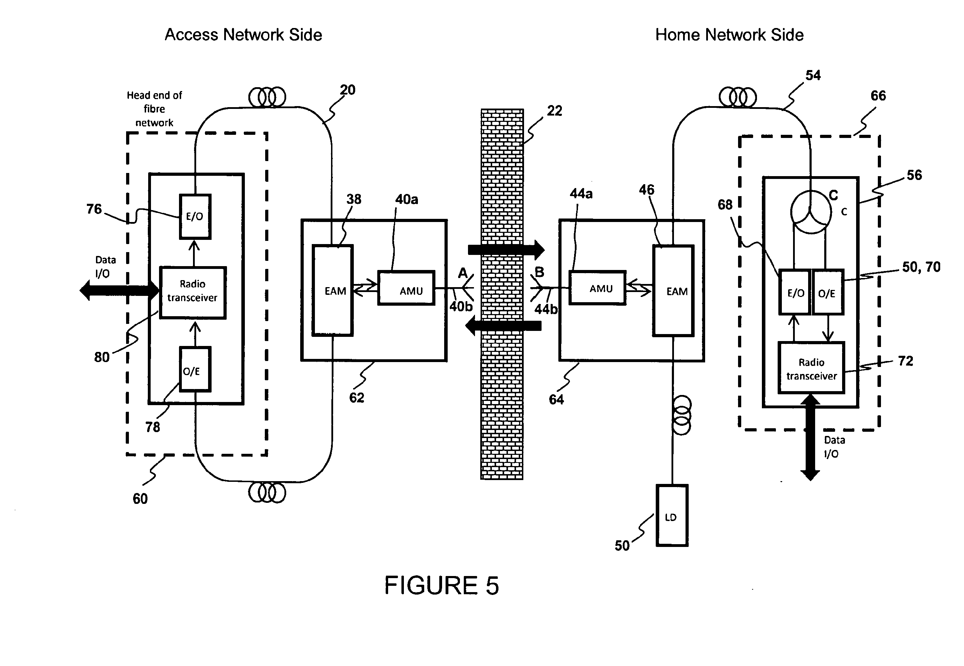

In such a uni-directional embodiment, the EAM 38 passively generates electrical signals from optical signals being transmitted on an optical fibre 20 of the first optical network 12. The electrical signals are provided to a directional antenna arrangement 40 (which comprises an antenna matching unit 40a and a directional antenna 40b not shown in Figure 1 but shown in Figures 4 and 5 of the accompanying drawings). The directional antenna 40b wirelessly transmits signals from the EAM 38 to a receiving directional antenna arrangement 44. The receiving directional antenna arrangement 44 comprises an antenna matching unit 44a and a directional antenna 4b (again not shown in Figure 2, see Figures 4 and 5) which is directed towards the first directional antenna 40b. The receiving directional antenna arrangement 44 provides electrical communications signals to the EAM 46 of the second component part 64. EAM 46 then transduces the electrical energy of the received signals to passively generate optical signals in optical fibre 54 of optical network 48.

In this way, optical communication signals are generated by the EAM from electrical communication signals the antenna arrangement 44 receives from the antenna arrangement 40. which establishes a uni-directional communications link from optical network 12 to optical network 48.

In another embodiment of the invention, the energy transfer is bi-directional and the two directional antenna arrangements 40, 44 are each arranged to operate as receivers and transmitters of wireless communications signals to provide a passively powered bidirectional wireless communications link 42 between the two optical networks 12, 48. In this embodiment, in addition to the functionality described hereinabove with reference to the provision of a uni-directional communications link, EAM 46 passively generates electrical signals from optical signals it receives on an optical fibre 54 of the second optical network 48. The electrical signals are provided to the directional antenna arrangement 44. The directional antenna 44b wirelessly transmits signals from the EAM 46 to the receiving directional antenna arrangement 40. The receiving directional antenna arrangement 40 provides electrical communications signals to the EAM 38 of the first component part 62. EAM 38 then transfers the electrical energy of the received signals to passively generate optical signals on optical fibre 20 of optical network 12.

Whilst in this bi-directional embodiment, EAMs 38, 46 operate in a duplex mode, each being capable of transferring energy from the optical to the electrical domain and vice versa, and each of the antenna arrangements 44, 44 is arranged to receive as well as transmit electrical signals wirelessly, those of ordinary skill in the art will be aware that a bi-directional connection can also be provided between the two component parts by a pair of uni-directional antenna arrangements and EAMs operating in opposite directions, etc.

Each EAM 38, 46 is a semiconductor device is used for modulating the intensity of an optical signal, for example, a laser beam via an electric voltage. Its principle of operation is based on the Franz-Keldysh effect, i.e., a change in the absorption spectrum caused by an applied electric field, which changes the bandgap energy (thus the photon energy of an absorption edge) but usually does not involve the excitation of carriers by the electric field. In the context of the invention, the modulator is physically small and uses a low modulation voltage. It is known that EAMs are suitable for use in external modulation links in the field of telecommunications where the EAMs comprise either bulk semiconductor materials or materials with multiple quantum dots or wells. In one embodiment a wireless coupler 36 comprises EAMs 38, 46 which each comprise a waveguide with electrodes arranged to apply an electric field in a direction perpendicular to the modulated light beams which are transmitted along optical fibres 20,54 forming optical networks 12 and 48 respectively. In one embodiment, a high extinction ratio, is achieved using a Quantum confined stark effect (QCSE) in a quantum well structure, although other means of improving the efficiency with which the transmitted optical power of an optical signal is modulated over the optical-fibre along which the optical signal is being transported known to those of ordinary skill in the art may be used in alternative embodiments of the invention.

The EAMs 38, 46 of the embodiment shown in Figure 2 are arranged to operate at very high speed, i.e., they have a modulation bandwidth of tens of gigahertz. In one embodiment of the invention, an EAM 38, 46 is integrated with distributed optical signal source, for example, a feedback laser diode on a single chip is used to form a data transmitter in the form of a photonic integrated circuit. This enables a higher bandwidth and reduced chirp to be obtained than is the case where direct modulation of the laser diode is provided. An example of an EAM which can be used by the invention is the EAM described in United States Patent Application US2008101798 (A1 ) entitled "Communication by radio waves and optical waveguides" which describes an improvement in the power of radio frequency energy radiated by EAMs.

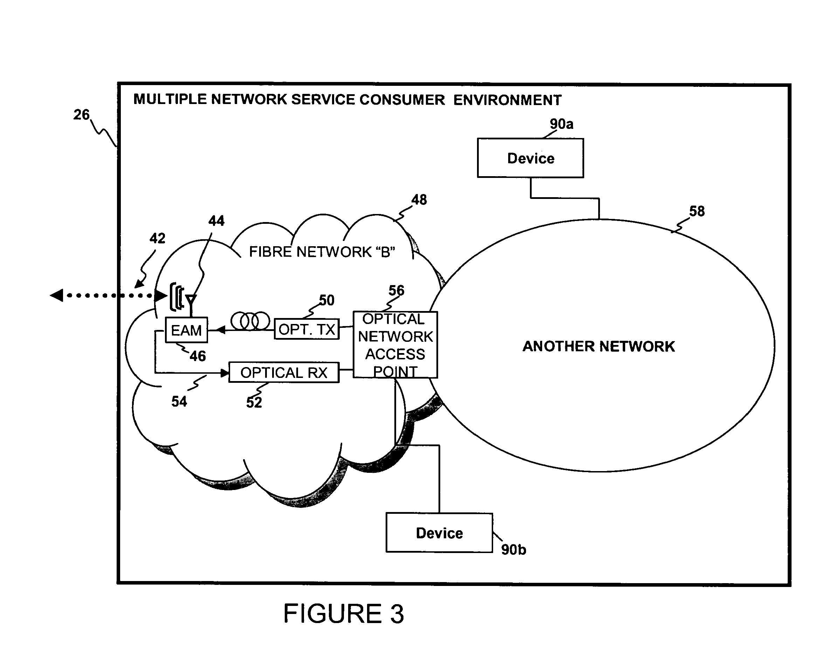

As mentioned above, in Figure 2, the EAM 38 of first component part 62 of the wireless connector 36 is connected to the optical fibre local loop 20 and is arranged to power an antenna arrangement 40 so that optical signals are transferred wirelessly along a wireless communications link 42 with antenna arrangement 44 located on the far side of obstacle 22. The antenna arrangement 42 is connected to the EAM 44 which is arranged to transfer the wireless signals to the optical fibre 54 comprising part of the optical network 48 in the premises 26 of a service consumer. Optical network 48 as shown in Figure 2 comprises an optical signal transmission source 50, and an optical signal receiver 52 using optical fibre loop 54. Also shown in Figure 2, is an optical network access point 56 by which means devices are able to connect to the optical network 48 either directly and/or via other networks 58 such as is shown in Figure 3 of the accompanying drawings.

Figure 3 of the accompanying drawings shows a communications system in which a plurality of networks located on a service consumer's premises are provided with access to an external optical network using a wireless connector 36 according to an embodiment of the invention. In Figure 3, wireless connector 36 provides a high-speed link between the client networks 48, 58 located on the service provider's premises and the external optical access network 12. On the service provider's premises, optical network 48 comprises an optical network access point 56 via which other apparatus (90a,b) and/or another network(s) 58 can connect to the optical access network. Optical network 48 comprises a suitably configured optical signal receiver 52 for receiving optical signals on optical fibre 54 (at least some of which if not all being optical signals provided via EAM 46 of the second component 62 of the wireless connector 36. If wireless communications link 42 is to operate in a bi-directional mode, then an optical signal source 50 is also provided to generate optical signals on optical fibre 54 which the EAM 46 then transduces into electrical signals for transmission by directional antenna 44b to the other directional antenna 40b and onwards by EAM 40 which transduces the received electrical signals to optical signals for onwards transmission over optical network 12.

Various embodiments of a wireless connector 36 according to the invention thus provide a high-speed uni- or bi-directional wireless communications link respectively to transfer information or data present in one optical fibre to another via a wireless (radio frequency) connection without the need for any actively powered (i.e. externally powered) devices.

Figure 4 of the accompanying drawings shown in more detail an embodiment of a wireless connector 36 according to the invention. In Figure 4, wireless connector 36 comprises two component parts 62, 64. First component part 62 comprises EAM 38 which passively powers antenna arrangement 40, shown in Figure 4 as comprising an antenna matching unit (AMU) 40a and a directional antenna 40b, for example, a directional antenna. The second component part comprises EAM 46 which passively powers directional antenna component 44, which is shown as comprising an antenna matching unit 44a and a directional antenna 44b. The first component part 62 is connected to the optical head end 60 of first optical network 12 via the connection of EAM 38 to optical fibre loop 20. The second component part 64 is connected to the optical head end 66 of second optical network 48 via the connection of EAM 46 to optical fibre loop 54.

As shown in Figure 4, the directional antennas 40b, 44b of antenna arrangements 40, 44 are arranged to provide a bi-directional point to point wireless link 42 between the two separate parts of wireless connector 36. The point-to-point directional characteristic of the wireless link 42 enables wireless data transfer speeds to support the data transfer speeds provided in at least one of the first and second optical networks, for example, data transfer speeds which match the transfer speeds of one or more communications channels of the access optical network can be supported.

The use of directional antennas 40b, 44b to provide a point-to-point connection enables the wireless connector shown in Figure 4 to support longer range and higher-speed data transfers from one optical network to another optical network without requiring any physical connection between the two networks 12, 48 and without recourse to any electrically powered devices at the points of connection (points A and B shown in Figure 4) to boost the signal amplification or to power any of the wireless connector component parts. Each component part uses a local source of optical energy and transduces this to generate electrical signals from the optical signals it receives. As shown in Figure 4, each of the EAM transducers 38, 46 operates in full duplex mode.

The collective arrangement of antennas 40a, 44a in the embodiment of a wireless connector 36 shown in Figure 4 enables a high speed wireless link 42 to be provided between the two component parts 62, and 64 of the wireless connector 36 The two component parts 62,64 are located at a distance from each other which is ideally enables the directional antennas 40a, 44a to be configured across the shortest cross-sectional distance through any physical obstacles along the path of the wireless communications link 42.

In Figure 5, another communications system is shown which uses a wireless connector 36 according to an embodiment of the invention. In Figure 5, the EAM 38 of first component part 62 of the wireless connector 36 is attached to an optical fibre 20 of said first optical communications network 12 at a location on one side of a physical obstruction or barrier 22 and the EAM 46 of second component part 64 is attached to an optical fibre 54 forming an optical communications link to an optical access point 56, shown in Figure 5 as comprising part of optical head-end 66.

As shown in Figure 5, the second optical fibre network optical signal source 50 comprises, for example, a laser diode, and is connected to the optical head end 66 via the EAM 46 of second component part 64. Those of ordinary skill in the art will be aware that the optical signal source 50, although not shown as being located within optical head end 66 in the embodiment shown in Figure 5 of a communications system, may be co-located with the head-end if optical fibre 50 is deployed as a loop to form a client optical network 48.

The optical signals which are received from the EAM 46 have a radio-frequency intensity modulation and within head-end 66 a pair of electro-optical signal converters 68, 70 are provided to which a radio transceiver 72 is connected which coverts received optical signals to a signal format suitable for onwards transmission within the service consumer's premises and vice versa. Thus, if the local area network within the service consumer's premises (or if directly connected to 56, the apparatus of the service consumer) generate Ethernet signals then the O/E signal converter 70 converts the received optical signals to enable Ethernet signals to be output. Similarly, if Ethernet signals are input to the optical network access point 56, the radio transceiver enables Ethernet signals to be converted to optical signals which are intensity modulated at radio frequencies. In this way, apparatus located on the service consumer premises is provided with access to the high-data connectivity speeds provided by an optical access network 12 using the wireless connector 36 to provide at least a downstream high-speed communications link if not a bi-directional communications link.

In one embodiment of a communications system according to the invention, a control module (not shown in Figure 5) is located at the head end 60 of the access fibre network 12. The control module is arranged to control the radio transceiver 80 and associated electro-optical (E/O) 76 and opto-electrical (O/E) 78 converters by which data delivered to the module is converted from energy in one domain (e.g. electrical) to another (e.g. optical). The E/O and O/E converters 76, 78 are controlled by the control module so that transmission of down and upstream data is divided into a precise time controlled cycle over the same physical optical fibre, enable communication channels to be provided in each direction along the fibre. This enables a single optical fibre 20 to provide a bi-directional communications link between optical networks 12,48

In this embodiment, control information which supports the same time-controlled cycle is transferred to a corresponding control module (again not shown in Figure 5) which located at the head end 66 in the client network environment 26 to control the optical signal source 50 (shown in Figure 5 as a laser diode (LD)) and the electrical/optical and optical/electrical signal converters 68, 70 (and any separate optical receiver component 52 if not integrated with optical/electrical signal converter 70).

The embodiment of the invention shown in Figure 5 will now be described in more detail.

In Figure 5, at point A on the access network side of physical obstruction 22, a radio frequency signal delivered optically by the connected optical fibre 22 is directly converted into electrically energy by EAM 38. The EAM 38 is connected to an external antenna 40b at point A by which the signal is wirelessly transmitted (e.g. transmitted over the air). For example, in one exemplary scenario, data is transferred from fibre 20 to another fibre 54 via a pair of component parts 62, 64 forming a wireless connector 36. Each component part includes suitable antenna arrangements 40, 44 which include directional antennas 40b, 44b configured to establish a point-to-point wireless link with each other of sufficient power to penetrate through a physical obstruction 22, for example, a building wall or other physical infrastructure. In one embodiment, the first component part 62 is an external component part attached to or located by the external wall of the service consumer premises within which the service consumer optical network 48 is provided and the other component part 64 of the wireless connector 36 is attached to the interior side of the external wall. In other embodiments, the first component part may be provided at the kerbside, and the wireless link may pass through more than one physical obstacle, for example, garden walls as well as any housing infrastructure walls. In both of these exemplary scenarios, each antenna 40b, 44b comprises a highly directional/high gain type of antenna and transmits signals of with sufficient energy and at an appropriate frequency so that despite the presence of obstructions which absorb the energy of the wireless signals on the line-of-sight path between the two antennas high data transfer speeds between the two optical links are provided. Nonetheless, the wireless communications link may extend up to the order of a couple of meters, but preferably the link will be less than 50 cm, and more preferably less then 30 cm, and may be as little as 10cm or less. The specific type of antenna 40b, 44b is selected for the working frequency and transmission distance required (and data speeds to be supported) can be of a type well known to those of ordinary skill in the art in an embodiment of the invention.

In Figure 5, on the service consumer (e.g. client or home) network side of obstacle 22, i.e., in the service consumer environment 26, any wireless signals on communications link 42 are received by antenna 44b connected to the EAM 46 within component part 64.

The function of the EAM 46 when receiving is to modulate light generated by a light source 50, for example, a laser diode (LD) shown in Figure 5. The radio signal delivered wirelessly to component part 64 is thus converted into the optical domain and the data is transferred to the head end 66 of the optical network 48 by the connected optical fibre 50.

Within the home network head end 66, optical network access point 56 is provided. As shown in Figure 5, optical network access point 56 comprises an optical circulator (C) which transfers optical signals delivered from the connected fibre 50 to the O/E converter 70 (which provide in part a similar function to that provided by the optical receiver 52 shown in Figures 2 and 3) and transfers optical signals generated by the E/O converter 68 to the connected fibre 50. When the optical circulate receives an optical signal, the radio-frequency optical signal is routed to the O/E converter 70 and the subsequent radio-frequency electrical signal is converted by radio transceiver 72 and associated sub-systems back into a signal conforming to an appropriate data communications protocol, for example, Ethernet.

Optical fibre 54 in the embodiment of the invention shown in Figure 5 supports bi-directional optical signals. When signals are being transmitted in the (upstream) direction from the client network environment 26 towards the access network 12, the light source 50 is turned off. Modulated light signals are instead produced by the E/O converter 68 and delivered from the optical circulator (C) along fibre 50 to the second part 64 of the wireless connector 36 where the EAM 46 converts the optical signals into electrical radio frequency energy which is transmitted by the antenna 44b, received by antenna 40b, and the steady state light (produced by the E/O converter 68) in the connected fibre 20 is modulated by the EAM 38 contained within component part 62 of the wireless connector 36. This modulated signal is then delivered to the O/E converter 70 which converts the received optical signals to electrical signals, for example, electrical signals at radio frequencies. The electrical energy each signal conveys at radio frequencies is then converted into data signals such as Ethernet signals by radio transceiver 80 and associated sub-systems using any appropriate techniques known in the art.

The above embodiments in which wireless connector 36 provides a bi-directional communications link seek to mitigate the asymmetry between the bandwidth delivered to customer premises and the maximum throughput supported by home networks in optical fibre access network deployment schemes. Optical fibre technology such as Plastic Optical Fibre (POF) is emerging as a networking technology that can be used to form the basis of a home network. Alternatively, single mode fibre (SMF) may be used, but minimum allowable bend radius of SMF is so great that it does not allow it in any way to be routed around skirting boards and doorways. Holey Fibre and Bendy Fibre (e.g. Corning ClearCurve™) have recently emerged that have minimum bend radii of less than 10 mm therefore both of these SMFs are therefore deployable in homes, providing suitable points of interconnection with a public service optical access network are provided. Such fibres thus can be used in association with various embodiments of this invention to enable the speed of the access network to be matched by and continued by the home network.

Another potential benefit of a network installation scheme which uses a method of connecting two optical networks according to an embodiment of the invention is the reduced installation costs to service providers. It is preferable to eliminate the need for an engineer to visit or enter the consumer's premises, and the wireless connector according to various embodiments of this invention couples wirelessly through a physical barrier such as a wall, a signal delivered by an optical fibre on the local access network side of the wall to another optical fibre which can be provided within the home by a third party, i.e., there is no need for the network operator to install any network infrastructure within the customer's premises (e.g. on the other side of the wall).

It is possible for a suitably positioned customer premises equipment component part of a wireless connector according to an embodiment of the invention to be installed by a service consumer. The component part of the wireless connector on the access side can be mounted (subsequently or beforehand) in reasonable alignment with the equivalent wireless connector component part on the other side of the external wall by a service provider's engineer. The fact that both the antenna units are passive is doubly advantageous in that it gives greater flexibility of positioning the antenna units because there is no need for the in-home one to be near a mains power (e.g. alternating current, AC power) outlet or have potentially unsightly wires running some distance to a power outlet or the head end of the home network. Nor is there any need to provide batteries (direct current, DC power) which may run out and/or need recharging from time to time. The only connection is the fibre pair which even when sheathed is relatively inconspicuous.

Moreover, within customer premises, the simply nature of the connector means that it is possible for customers and/or third parties to install optical networks in a variety of configurations without needing to bore apertures through physical obstructions such as walls, floors and roofs etc.

Those of ordinary skill in the art will be aware of many potential alternatives to the features explicitly described herein the context of the various embodiments of the invention, and the description includes all functional equivalents to the variously described embodiments where the use of such functional equivalents would be apparent to one of ordinary skill in the art unless such extension is explicitly excluded.

Where the above embodiments of the invention refer to a radio-frequency wireless signal being transmitted between the two components of the wireless connector, those of ordinary skill in the art will appreciate that in alternative embodiments, other signal frequencies may be used by the wireless connector, for example micro-wave.

The wireless connector 36 described herein above is suitable for use in a method of connecting a pair of optical communications networks according to an embodiment of the invention. For example, a communications network provided on a service consumer's premises 26, such as, for example, a home (or residential) local area network (or networks via optical network access point) can be connected to a public service optical access network 12 by optically coupling a first component part of said wireless connector comprising an electro-absorption modulator and a connected directional antenna to a first optical communications network and optically coupling a second component part of said wireless connector comprising an electro-absorption modulator and a connected directional antenna to a second optical communications network, and arranging the directional antennas to provide a uni or bi-directional point-to-point wireless communications link between said first and second optical fibre networks.

## Claims

1. A wireless connector for connecting a pair of optical networks providing data communications, comprising:
a first component part including a first directional antenna connected to a first energy transducer; and
a second component part including a second directional antenna connected to a second energy transducer,
wherein,
the first directional antenna is arranged to transmit electrical signals passively derived from optical energy received by the first energy transducer from said first one of said pair of optical networks, and
wherein the second energy transducer is arranged to passively generate optical signals in said other one of said pair of optical networks responsive to electrical signals received by said second directional antenna from said first directional antenna.

2. A wireless connector as claimed in claim 1, wherein, in use of the wireless connector,
the first energy transducer is arranged to be coupled to an optical fibre of said first one of said pair of optical networks, and
the second energy transducer is arranged to be coupled to an optical fibre of said other one of said pair of optical networks, and
said first directional antenna is arranged to wirelessly connect said pair of optical networks to provide a point-to-point data communications link by transmitting said electrical signals derived from optical energy of said first one of said pair of optical networks to said second directional antenna.

3. A wireless connector as claimed in claim 2, wherein the point-to-point communications link is bi-directional and the energy transducers of each component part operate in a duplex mode to enable electrical signals to be wirelessly transferred in one direction from an optical fibre in the other optical network to an optical fibre in the first optical network and in another direction from the first optical network to the other optical network.

4. A wireless connector as claimed in any previous claim, wherein the electrical signals are radio-frequency signals and the optical signals are radio-frequency signals.

5. A wireless connector as claimed in any previous claim, wherein in use the antennas wirelessly connect through a physical barrier between the first and second antennas.

6. A wireless connector as claimed in any previous claim, wherein said energy transducers comprise electro-absorption modulators.

7. A method of connecting a first optical communications network provided on client premises to a second optical network using a wireless connector, the method comprising:
coupling a first component part of said wireless connector comprising an electro-absorption modulator and a connected directional antenna to said first optical communications network;
coupling a second component part of said wireless connector comprising an electro-absorption modulator and a connected directional antenna to said second optical communications network, and
arranging the directional antennas to provide a point-to-point wireless communications link between said first and second optical fibre networks.

8. A method as claimed in claim 7, further comprising:
aligning the direction of wireless transmission of said antennas of each component part of said wireless connector such that the wireless link provided by the wireless connector supports the transmission rate of data within a communications channel of one or both of said optical networks.

9. A communications system comprising:
a first optical fibre communications network including a first electro-absorption modulator arranged to send provide electrical signals to a first directional antenna;
a second optical fibre communications network including a second electro-absorption modulator arranged to receive electrical signals from
a second directional antenna;
wherein the first and second electro-absorption modulators are arranged to passively power said first and second antennas to establish a point-to-point wireless communications link between said first and second optical fibre networks.

10. A communications system as claimed in claim 9, wherein the wireless communications link passes through a physically solid obstruction providing a barrier between the first and second optical fibre networks.

11. A communications system comprising:
at least two optical networks;
at least two energy transducing means, each coupled to one of said at least two optical networks; and
at least two wireless signal transceiver means, each connected to a said energy transducing means, whereby a pair of said at least two wireless signal transceiver means generate a wireless point-to-point communications link between a respective pair of optical networks.

12. A module comprising a component part of a wireless connector as claimed in claim 1, the module comprising:
an energy transducer; and
a directional antenna connected to said energy transducer.
